# EUROPÄISCHE PATENTANMELDUNG

(11) **EP 0 742 637 A1**
(43) Veröffentlichungstag der Anmeldung: **13.11.1996**
(21) Anmeldenummer: 96107439.0
(22) Anmeldetag: 10.05.1996
(51) Int. Cl.: H02P 3/22, H02P 6/24

(54) **Verfahren sowie Vorrichtung zum sicheren Abbremsen eines elektrischen Antriebes**

(30) Priorität: 11.05.1995 DE 19517377
(71) Anmelder: SIEMENS AKTIENGESELLSCHAFT, 80333 München (DE)
(72) Erfinder: Hauf, Ronald,Dipl.-Ing., 91096 Möhrendorf (DE)

(57) **Zusammenfassung**

Um bei elektrischen Antrieben im Fehlerfall eine Notbremsung herbeizuführen, wird in der Steuerung eine Möglichkeit zur Herstellung eines integrierten Ankerkurzschlusses geschaffen, indem eine Wechselrichter-Brücke in sicherer Technik gesperrt wird, während die andere Wechselrichter-Brücke durch getaktete Ansteuerung einen Kurzschluß der Phasen des elektrischen Antriebes herbeiführt. Durch gezielte Taktung, beispielsweise durch optimale Momentensteuerung über eine Kennlinie, lassen sich Reaktionszeiten und Bremszeit optimieren.

## Beschreibung

Die Erfindung bezieht sich auf ein Verfahren sowie eine dazugehörige Vorrichtung zum sicheren Abbremsen eines über einen Umrichter getriebenen elektrischen Drei-Phasen-Antriebes durch Erzeugen eines Ankerkurzschlusses in besagtem Antrieb.

Wie in allen Bereichen der Elektronik kann es auch auf dem Gebiet der Antriebselektronik zum Ausfall von elektronischen Bauelementen des Antriebes wie beispielsweise einem Mikroprozessor oder einem Geber kommen. Die entsprechenden elektrischen Antriebe trudeln in einem solchen Fehlerfall aus. Da sie nicht mehr kontrolliert werden können, müssen sie durch eine Notbremsung stillgesetzt werden. Dazu wird im allgemeinen die Energiezuführung zum Motor sicher unterbrochen. Ohne zusätzliche Maßnahmen jedoch wird die im System befindliche kinetische Energie nur über die Reibung abgebaut. Je nach Aufbau der durch einen solchen elektrischen Antrieb angetriebenen Maschine und der zugrundeliegenden Masse kann es zu entsprechend langen Auslaufzeiten kommen. Dabei können Achsen auf Endanschläge auffahren, bei elektronisch verkoppelten Achsen kann es zu Kollisionen kommen oder hängende Achsen fallen mit ihrer Gewichtskraft nach unten.

In diesen Fällen muß ein elektrischer Antrieb somit durch eine Notbremsung mit den verbleibenden Mitteln stillgesetzt werden. Dazu werden herkömmlicher Weise mechanische Bremsen eingesetzt, welche über eine externe Logik gesteuert werden. Zur Stromverstärkung werden solche mechanische Bremsen über externe Relais geschaltet. Durch Entregung einer Spule entlastet sich eine vorgespannte Feder und bringt das erforderliche Bremsmoment zum Stillsetzen des elektrischen Antriebes auf.

In einem anderen bekannten Verfahren zum Stillsetzen eines elektrischen Antriebes durch eine Notbremsung wird ein externer Ankerkurzschluß des elektrischen Antriebes vorgenommen. Dieser wird ebenfalls über eine externe Logik gesteuert und über ebenfalls externe Schütze geschaltet. Zur Begrenzung des Bremsmomentes dienen externe Widerstände. Durch Entregung einer Schutzspule werden über Kontakte die drei Phasen des Motors kurzgeschlossen. Über die Kurzschlußbrücke treibt die Motor-EMK den Bremsstrom. Der Bremsstrom und damit das Bremsmoment kann über Widerstände begrenzt werden.

Beiden bekannten Maßnahmen zur Notbremsung eines elektrischen Antriebes im Fehlerfall besitzen den Nachteil, daß sie externe Einheiten benötigen, welche selbst störanfällig sind und darüber hinaus mit zusätzlichen Kosten verbunden sind. Hinzu kommt, daß es sich in beiden Fällen um kontaktbehaftete Elektronik handelt, welche neben der Fehleranfälligkeit auch ungünstige Reaktionszeiten bedingt.

Aufgabe der vorliegenden Erfindung ist es daher, ein Verfahren sowie eine dazugehörige Vorrichtung zum sicheren Abbremsen eines über einen Umrichter getriebenen elektrischen Drei-Phasen-Antriebes zu schaffen, welche in die Steuerung eines elektrischen Antriebes integriert werden kann und somit keine externe Bauelemente benötigt. Durch den Wegfall externer Bauelemente sollen die Herstellungskosten verringert werden und die Fehleranfälligkeit durch diese zusätzlichen Bauelemente vermieden werden. Zudem sollen die Reaktionszeiten und somit die Bremszeit verkürzt werden.

Gemäß der vorliegenden Erfindung wird diese Aufgabe durch ein Verfahren mit den folgenden Verfahrensschritten gelöst:
1.1 eine Wechselrichter-Brücke, welche durch die mit der Plusschiene oder Minusschiene des Zwischenkreises verbundenen Transistoren gebildet wird, wird gesperrt,
1.2 die andere Wechselrichter-Brücke, welche durch die mit der entsprechend anderen Potentialschiene des Zwischenkreises verbundenen Transistoren gebildet wird, wird so getaktet angesteuert, daß mindestens zwei Phasen des elektrischen Antriebes über die zugehörige Potentialschiene kurzgeschlossen werden,
1.3 durch die Taktfrequenz, mit der die unter 1.2 genannte Wechselrichter-Brücke angesteuert wird, wird das Bremsmoment geeignet variiert.

Auf diese Art und Weise lassen sich die Maßnahmen zur Notbremsung eines elektrischen Antriebes ohne externe Bauelemente durch integrieren in die Steuerung des elektrischen Antriebes erreichen. Hinzu kommt, daß durch die Lösung der Aufgabe gemäß der vorliegenden Erfindung das Bremsmoment beliebig variiert werden kann.

In einer ersten vorteilhaften Ausgestaltung des Verfahrens gemäß der vorliegenden Erfindung wird erreicht, daß die Energiezuführung zum elektrischen Antrieb vor Einleitung der geschilderten Maßnahmen zur Notbremsung sicher unterbrochen wird. Dies geschieht durch folgenden weiteren Verfahrensschritt:
2.1 den Maßnahmen geht eine Impulslöschung der Transistoren des Wechselrichters voraus.

In einer weiteren vorteilhaften Ausgestaltung des Verfahrens gemäß der vorliegenden Erfindung wird erreicht, daß eine Notbremsung mit den Verfahrensschritten gemäß der vorliegenden Erfindung optimal an den verwendeten elektrischen Antrieb bzw. an die durch den Antrieb angetriebene Mechanik angepaßt werden kann. Dies wird durch folgenden weiteren Verfahrensschritt herbeigeführt:
3.1 die Taktfrequenz, mit der die unter 1.2 genannte Wechselrichter-Brücke angesteuert wird, wird über eine antriebsspezifische und/oder mechanikspezifische Kennlinie gesteuert.

In einer weiteren vorteilhaften Ausgestaltung des Verfahrens gemäß der vorliegenden Erfindung wird eine Maßnahme aufgezeigt, durch die eine Anpassung an antriebsspezifische oder mechanikspezifische Eigenschaften optimal erfolgen kann. Dies geschieht durch folgenden weiteren Verfahrensschritt:
4.1 die Kennlinie zur Steuerung der Taktfrequenz wird bei der Projektierung ermittelt.

In einer weiteren vorteilhaften Ausgestaltung des Verfahrens gemäß der vorliegenden Erfindung werden weitere mechanikschonende Möglichkeiten bei einer Notbremsung erreicht. Dies geschieht durch folgenden weiteren Verfahrensschritt:
5.1 der Bremsverlauf wird durch Steuerung der Taktfrequenz so geführt, daß ein weicher Bremseinsatz erfolgt.

In einer weiteren vorteilhaften Ausgestaltung des Verfahrens gemäß der vorliegenden Erfindung wird die Bremswirkung durch zusätzliche Maßnahmen verbessert. Dies geschieht durch folgenden weiteren Verfahrensschritt:
6.1 ergänzend wird eine mechanische Haltebremse eingesetzt.

In einer weiteren vorteilhaften Ausgestaltung des Verfahrens gemäß der vorliegenden Erfindung wird erreicht, daß die Bremswirkung für hohe Drehzahlen sowie für niedrige Drehzahlen optimiert wird. Dies geschieht durch folgende weitere Verfahrensschritte:
7.1 die Maßnahmen zur Herstellung eines Ankerkurzschlusses werden bei hohen Drehzahlen des Antriebes ergriffen,
7.2 die mechanische Haltebremse wird bei niedrigeren Drehzahlen zugeschaltet.

Um das im vorangehen geschilderte Verfahren gemäß der vorliegenden Erfindung und die damit verbundenen Vorteile durchzuführen wird eine Vorrichtung geschaffen, welche ein sicheres Abbremsen eines über einen Umrichter getriebenen elektrischen Drei-Phasen-Antriebes ermöglicht. Diese Vorrichtung weist folgende Merkmale auf:
8.1 es sind Mittel zum Sperren einer Wechselrichter-Brücke vorgesehen, welche durch die mit der Plusschiene oder Minusschiene des Zwischenkreises verbundenen Transistoren gebildet wird,
8.2 es sind Mittel zur Taktung der anderen Wechselrichter-Brücke vorgesehen, welche durch die mit der entsprechend anderen Potentialschiene des Zwischenkreises verbundenen Transistoren gebildet wird, wodurch mindestens zwei Phasen des elektrischen Antriebes über die entsprechende Potenialschiene kurzgeschlossen werden,
8.3 es sind Mittel zur Steuerung der Taktfrequenz vorgesehen, mit der die unter 8.2 genannte Wechselrichter-Brücke angesteuert wird.

In einer ersten vorteilhaften Ausgestaltung der Vorrichtung gemäß der vorliegenden Erfindung wird die Bremswirkung verstärkt und zusätzlich eine sichere Unterbrechung der Energiezuführung zum elektrischen Antrieb im Fehlerfall ermöglicht. Dies geschieht durch folgende weitere Merkmale:
9.1 es sind Mittel zur Impulslöschung der Transistoren des Wechselrichters vorgesehen,
9.2 es ist eine zusätzliche mechanische Haltebremse vorgesehen.

In einer weiteren vorteilhaften Ausgestaltung der Vorrichtung gemäß der vorliegenden Erfindung wird erreicht, daß die Elemente der erfindungsgemäßen Vorrichtung ausschließlich auf Seiten der Regelung des elektrischen Antriebes angeordnet werden können. Dies geschieht durch folgendes weiteres Merkmal:
10.1 die Vorrichtung weist einen über Optokoppler verbundenen Leistungsteil und einen Regelungsteil auf, wobei das Mittel zur Taktung der unter 8.2 genannten Wechselrichter-Brücke und das Mittel zur Steuerung der Taktfrequenz ausschließlich auf Seiten des Regelungsteiles angeordnet sind.

Weitere erfinderische Einzelheiten und Vorteile ergeben sich aus nachfolgender Beschreibung eines Ausführungsbeispiels anhand der Zeichnung und in Verbindung mit den Unteransprüchen. Es zeigt:

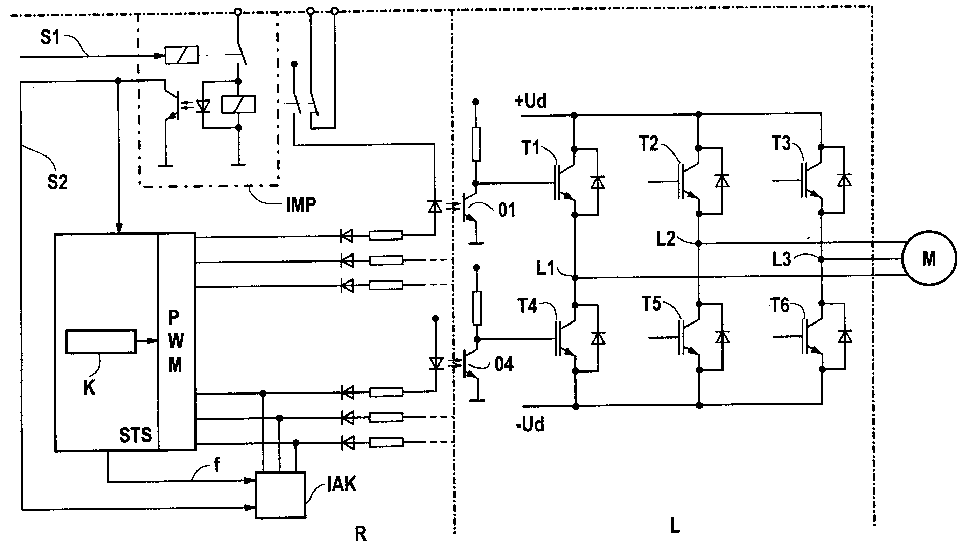

- FIG 1: ein mögliches Ausführungsbeispiel zur Realisierung eines integrierten Ankerkurzschlusses für elektrische Antriebe zur Notbremsung im Fehlerfall.

In der Darstellung gemäß FIG 1 ist eine ausschnittsweise Schaltungsanordnung zur Realisierung eines integrierten Ankerkurzschlusses für elektrische Antriebe zur Notbremsung im Fehlerfall gezeigt. Ein Drei-Phasen-Antrieb M mit den Phasen L1,L2,L3 wird dabei über einen Umrichter getrieben. Dieser Umrichter ist in der Darstellung gemäß FIG 1 nur in Ausschnitten gezeigt, so weit dieser zur Realisierung der vorliegenden Erfindung von Belang ist. Es ist dazu ein Wechselrichter mit seinen beiden Wechselrichter-Brücken gezeigt, welcher durch die Transistoren T1 bis T6 gebildet wird. Diese Transistoren sind vorteilhafter Weise als IGBT-Leistungstransistoren ausgeprägt und besitzen jeweils eine Freilaufdiode, welche Ermitter und Kollektor überbrückt. Die Transistoren T1 bis T3 bilden die obere Wechselrichter-Brücke und sind mit der Plusschiene +Ud des Zwischenkreises (nicht gezeigt) verbunden. Analog dazu bilden die Transistoren T4 bis T6 die untere Wechselrichter-Brücke und sind mit der Minusschiene -Ud des Zwischenkreises verbunden. Die einzelnen Transistoren T1 bis T6 werden über Optokoppler angesteuert, von denen exemplarisch für die Transistoren T1 und T4 solche Optokoppler O1 und O4 gezeigt sind. Der geschilderte Wechselrichter stellt den Leistungsteil L dar, der durch die Optokoppler O1 und O4 vom Regelungsteil R getrennt ist. Der elektrische Antrieb M ist mit den einzelnen Phasen L1,L2 und L3 zwischen der oberen Wechselrichter-Brücke und der unteren Wechselrichter-Brücke mit dem Wechselrichter verbunden.

Der Regelungsteil R weist einen Pulsweiten-Modulator PWM auf, welcher die Signale zur Ansteuerung der Optokoppler und damit zum Schalten der Stromventile T1 bis T6 des Wechselrichters liefert. Diese sind anhand von Signalleitungen gezeigt, welche vom Pulsweiten-Modulator PWM in Form von drei jeweils mit einer Diode und einem Widerstand in Serie versehenem Signalleitungen für die obere Wechselrichter-Brücke und analog dazu mit drei gleichen Signalleitungen für die untere Wechselrichter-Brücke versehen sind. Für die beiden gezeigten Optokoppler O1 und O4 ist die Ansteuerung exemplarisch dargestellt. Des weiteren weist der Regelungsteil R Mittel zur Impulslöschung IMP auf, welche die Energiezuführung zum elektrischen Antrieb durch das Löschen der Impulse am Wechselrichter unterbrechen. Dieses wird durch ein Signal S1 angesteuert. Das Mittel IMP zur Impulslöschung ist in der Darstellung gemäß FIG 1 exemplarisch durch eine Schutzspule dargestellt, welche durch das Signal S1 entregt wird, wodurch wiederum ein Relais aktiviert wird, welches ausgewählte Signalleitungen zur Ansteuerung der Optokoppler O1,O4 deaktiviert. Zusätzlich wird durch einen weiteren Optokoppler, welcher in das Mittel IMP zur Impulslöschung integriert ist, ein Statussignal S2 erzeugt. Dieses wird zum einen zum Pulsweiten-Modulator PWM sowie zum anderen zu einer Funktionseinheit IAK zur Herstellung eines integrierten Ankerkurzschlusses geführt.

Gemäß der vorliegenden Erfindung wird im Fehlerfall eine der beiden Wechselrichter-Brücken in sicherer Technik gesperrt, während die andere Wechselrichter-Brücke durch getaktete Ansteuerung der Leistungstransistoren so geschaltet wird, daß mindestens zwei Phasen L1...L3 des elektrischen Antriebes M kurzgeschlossen werden. Im Ausführungsbeispiel gemäß FIG 1 wird die obere Wechselrichter-Brücke, welche durch die mit der Plusschiene +Ud des Zwischenkreises verbundenen Transistoren T1 bis T3 gebildet wird, gesperrt, während die untere Wechselrichter-Brücke, welche durch die mit der Minusschiene -Ud des Zwischenkreises verbundenen Transistoren T4 bis T6 gebildet wird, getaktet angesteuert wird. Ebenso gut ist es jedoch auch möglich, die untere Wechselrichter-Brücke zu sperren und die obere Wechselrichter-Brücke getaktet anzusteuern.

Dazu werden im vorliegenden Ausführungsbeispiel die Leistungstransistoren T1 bis T3 der oberen Wechselrichter-Brücke sicher gesperrt, indem die Optokoppler zu deren Ansteuerung, von denen exemplarisch der Optokoppler O1 gezeigt ist, durch das Mittel zur Impulslöschung IMP impulsgelöscht werden, indem die Stromversorgung für die Ansteuerung dieser Optokoppler unterbrochen wird.

Gleichzeitig wird die Funktionseinheit IAK zur Herstellung des integrierten Ankerkurzschlusses durch das Signal S2 der Impulslöschung IMP aktiviert. Die Funktionseinheit IAK zur Herstellung des integrierten Ankerkurzschlusses ist mit den Signalleitungen zur Ansteuerung der Optokoppler für die untere Wechselrichter-Brücke verbunden und wird eingangsseitig durch eine Taktfrequenz f vom Pulsweiten-Modulator PWM angesteuert. Durch die Funktionseinheit IAK zum integrierten Ankerkurzschluß werden nun im Fehlerfall zur erforderlichen Notbremsung alle Transistoren T4 bis T6 der unteren Wechselrichter-Brücke durchgeschaltet, so daß die drei Phasen L1,L2 und L3 des elektrischen Antriebes M über die Minusschiene -Ud kurzgeschlossen werden.

Denkbar ist auch, daß jeweils nur zwei der Transistoren T4 bis T6 durch die Funktionseinheit IAK zum integrierten Ankerkurzschluß angesteuert werden, wodurch sich ein Zwei-Phasen-Kurzschluß ergibt. Bei letzterem ist die erzielte Bremswirkung jedoch geringer als beim zuvor geschilderten Drei-Phasen-Kurzschluß, wo alle drei Transistoren T4 bis T6 der unteren Wechselrichter-Brücke durchgeschaltet werden. Über die so hergestellte Kurzschlußbrücke zwischen den drei Phasen des elektrischen Antriebes treibt die verbleibende kinetische Energie des elektrischen Antriebes den Bremsstrom.

Durch die getaktete Ansteuerung mittels der Taktfrequenz f können die Transistoren T4 bis T6 der unteren Wechselrichter-Brücke nun so gezielt durchgeschaltet werden, daß dadurch den Kurzschluß herbeigeführte Bremsmoment geeignet variiert werden kann. Auf diese Weise kann mittels Taktung eine optimale Momentensteuerung erzielt werden, wodurch sich die Bremszeit im Vergleich zu herkömmlichen Verfahren zur Notbremsung erheblich verkürzen läßt. Auch läßt sich auf diese Weise mechanikschonend ein "weicher" Bremseinsatz herbeiführen.

Die Taktfrequenz f zur Ansteuerung der Transistoren T4 bis T6 der unteren Wechselrichter-Brücke kann, wie im Ausführungsbeispiel gemäß FIG 1 gezeigt, von einem Pulsweiten-Modulator PWM geliefert werden. Zur Bestimmung der Taktfrequenz f ist in entsprechenden Speichermitteln, flüchtig oder nichtflüchtig, eine Kennlinie K abgelegt, welche es ermöglicht, die Taktfrequenz f antriebsspezifisch und mechanikspezifisch zu steuern. Dazu werden die Daten einer solchen Kennlinie K beispielsweise bei der Projektierung einer Maschine mit einem elektrischen Antrieb ermittelt und in einem entsprechend dafür vorgesehenes Speichermittel abgelegt. Anstelle einer Taktung über eine Taktfrequenz f, durch die der Ankerkurzschluß jeweils kurzzeitig hergestellt und wieder aufgehoben wird, ist auch eine Vorgehensweise denkbar, bei der jeweils abhängig vom gewünschten Bremsmoment zwischen unterschiedlichen Kurzschlußzuständen hin und her geschaltet wird. So kann zur Erreichung eines besonders großen Bremsmomentes ein Kurzschluß aller drei Phasen durch Schalten der Transistoren T4 bis T6 erfolgen, während bei abgeschwächtem Bremsmoment lediglich zwei dieser Transistoren einen Zwei-Phasen-Kurzschluß herbeiführen können.

Ein solches Verfahren zum sicheren Abbremsen empfiehlt sich vor allem bei permanent erregten Synchronmotoren.

Die Aktivierung der Herstellung eines integrierten Ankerkurzschlusses gemäß der vorliegenden Erfindung läßt sich auch so projektieren, daß eine solche Aktivierung nur nach einer Impulslöschung der Transistoren T1 bis T6 erfolgt. Auch läßt sich über die geschilderten Maßnahmen eine Funktion "sicherer Halt" realisieren, indem bezugnehmend auf das in FIG 1 dargestellte Ausführungsbeispiel die obere Wechselrichter-Brücke impulsgelöscht ist und nur deren Optokoppler zur Ansteuerung der Transistoren T1 bis T3 spannungsfrei sind. Die untere Wechselrichter-Brücke jedoch bleibt aktiv, indem die für die entsprechenden Transistoren T4 bis T6 vorgesehenen Optokoppler dauerhaft angesteuert werden. Auf diese Weise ist ein direkter Übergang vom Bremsbetrieb mit integriertem Ankerkurzschluß in den Betriebszustand "sicherer Halt" möglich.

Dadurch, daß der Funktionsumfang ausschließlich auf dem Regelungsteil R angeordnet ist, kann der Leistungsteil L unverändert bleiben. Somit ergibt sich ein einfacher und kostengünstiger Schaltschrankaufbau, da der komplette externe Aufbau einer Ankerkurzschlußbremse mit Schützen, Schaltlogikverkablung und Bremswiderständen entfällt. Hinzu kommt, daß keine kontaktbehaftete Elektronik eingesetzt wird, was kürzere Reaktionszeiten zur Folge hat.

Als ergänzende Maßnahme zum integrierten Ankerkurzschluß kann zusätzlich eine mechanische Haltebremse vorgesehen werden, welche bei gleichzeitiger Aktivierung einen entsprechend kürzeren Bremsweg ermöglicht. Dabei wird die Erkenntnis benutzt, daß die Bremswirkung von mechanischer Haltebremse und die Bremswirkung durch den Ankerkurzschluß umgekehrt proportional sind. Der Ankerkurzschluß erzeugt bei hohen Drehzahlen das größte Bremsmoment und wird aus diesem Grund bereits bei hohen Drehzahlen aktiviert. Da das Bremsmoment der mechanischen Haltebremse bei hohen Drehzahlen gering ist, wird diese erst bei niedrigeren Drehzahlen aktiviert. Auf diese Weise wird eine kürzestmögliche Bremszeit gewährleistet.

Die gemäß des Ausführungsbeispieles der Darstellung nach FIG 1 gezeigte Schaltungsanordnung zur Herstellung eines integrierten Ankerkurzschlusses besitzt zudem den Vorteil, daß sie auch nach einem Ausfall des zentralen Signalprozessors einer Steuerung aktiv wird, da sie eigenständig und unabhängig von anderen Schaltungsmitteln zur Steuerung des elektrischen Antriebes funktionsfähig ist und anspricht.

## Patentansprüche

1. Verfahren zum sicheren Abbremsen eines über einen Umrichter getriebenen elektrischen Drei-Phasen-Antriebes (L1...L3, M) durch Erzeugen eines Ankerkurzschlusses in besagtem Antrieb, mit folgenden Verfahrensschritten:
1.1 eine Wechselrichter-Brücke, welche durch die mit der Plusschiene (+Ud) oder Minusschiene (-Ud) des Zwischenkreises verbundenen Transistoren (T1...T3 oder T4...T6) gebildet wird, wird gesperrt,
1.2 die andere Wechselrichter-Brücke, welche durch die mit der entsprechend anderen Potentialschiene des Zwischenkreises verbundenen Transistoren gebildet wird, wird so getaktet angesteuert, daß mindestens zwei Phasen (L1...L3) des elektrischen Antriebes (M) über die zugehörige Potentialschiene kurzgeschlossen werden,
1.3 durch die Taktfrequenz (f), mit der die unter 1.2 genannte Wechselrichter-Brücke angesteuert wird, wird das Bremsmoment geeignet variiert.

2. Verfahren nach Anspruch 1, mit folgendem weiteren Verfahrensschritt:
2.1 den Maßnahmen geht eine Impulslöschung der Transistoren (T1...T6) des Wechselrichters voraus.

3. Verfahren nach Anspruch 1 oder 2, mit folgendem weiteren Verfahrensschritt:
3.1 die Taktfrequenz (f), mit der die unter 1.2 genannte Wechselrichter-Brücke angesteuert wird, wird über eine antriebsspezifische und/oder mechanikspezifische Kennlinie (K) gesteuert.

4. Verfahren nach Anspruch 3, mit folgendem weiteren Verfahrensschritt:
4.1 die Kennlinie (K) zur Steuerung der Taktfrequenz (f) wird bei der Projektierung ermittelt.

5. Verfahren nach einem der vorangehenden Ansprüche, mit folgendem weiteren Verfahrensschritt:
5.1 der Bremsverlauf wird durch Steuerung der Taktfrequenz (f) so geführt, daß ein weicher Bremseinsatz erfolgt.

6. Verfahren nach einem der vorangehenden Ansprüche, mit folgendem weiteren Verfahrensschritt:
6.1 ergänzend wird eine mechanische Haltebremse eingesetzt.

7. Verfahren nach Anspruch 6, mit folgenden weiteren Verfahrensschritten:
7.1 die Maßnahmen zur Herstellung eines Ankerkurzschlusses werden bei hohen Drehzahlen des Antriebes ergriffen,
7.2 die mechanische Haltebremse wird bei niedrigeren Drehzahlen zugeschaltet.

8. Vorrichtung zum sicheren Abbremsen eines über einen Umrichter getriebenen elektrischen Drei-Phasen-Antriebes (L1...L3,M) durch Erzeugen eines Ankerkurzschlusses in besagtem Antrieb, mit folgenden Merkmalen:
8.1 es sind Mittel (O1,O4,...) zum Sperren einer Wechselrichter-Brücke vorgesehen, welche durch die mit der Plusschiene (+Ud) oder Minusschiene (-Ud) des Zwischenkreises verbundenen Transistoren (T1...T3 oder T4...T6) gebildet wird,
8.2 es sind Mittel (IAK) zur Taktung der anderen Wechselrichter-Brücke vorgesehen, welche durch die mit der entsprechend anderen Potentialschiene des Zwischenkreises verbundenen Transistoren (T4...T6) gebildet wird, wodurch mindestens zwei Phasen (L1...L3) des elektrischen Antriebes (M) über die entsprechende Potenialschiene kurzgeschlossen werden,
8.3 es sind Mittel (PWM) zur Steuerung der Taktfrequenz (f) vorgesehen, mit der die unter 8.2 genannte Wechselrichter-Brücke angesteuert wird.

9. Vorrichtung nach Anspruch 8, mit folgenden weiteren Merkmalen:
9.1 es sind Mittel (IMP) zur Impulslöschung der Transistoren (T1...T6) des Wechselrichters vorgesehen,
9.2 es ist eine zusätzliche mechanische Haltebremse vorgesehen.

10. Vorrichtung nach Anspruch 8 oder 9, mit folgendem weiteren Merkmal:
10.1 die Vorrichtung weist einen über Optokoppler (O1, O4,...) verbundenen Leistungsteil (L) und einen Regelungsteil (R) auf, wobei das Mittel (IAK) zur Taktung der unter 8.2 genannten Wechselrichter-Brücke und das Mittel (PWM) zur Steuerung der Taktfrequenz (f) ausschließlich auf Seiten des Regelungsteiles (R) angeordnet sind.
